# EUROPÄISCHE PATENTANMELDUNG

(11) **EP 3 666 585 A1**
(43) Veröffentlichungstag der Anmeldung: **17.06.2020**
(21) Anmeldenummer: 18211936.2
(22) Anmeldetag: 12.12.2018
(51) Int. Cl.: B60L 53/00, B60L 53/14, B60L 53/30, B60L 53/10

(54) **ELEKTRISCH BETRIEBENES FAHRZEUG UND LADESYSTEM**

(71) Anmelder: Siemens Aktiengesellschaft, 80333 München (DE)
(72) Erfinder: Tannhäuser, Marvin, 91096 Möhrendorf (DE)

(57) **Zusammenfassung**

Elektrisch betriebenes Fahrzeug mit
- einem Elektromotor für den Antrieb des Fahrzeugs,
- einer Batterie zur elektrischen Versorgung des Elektromotors,
- einer Ladeanschlussbuchse zum Anschluss eines Ladekabels für die elektrische Wiederaufladung der Batterie, gekennzeichnet durch eine zweite Ladeanschlussbuchse zum Anschluss eines zweiten Ladekabels für die elektrische Wiederaufladung der Batterie.

## Beschreibung

Die Erfindung betrifft ein elektrisch betriebenes Fahrzeug sowie ein Ladesystem zur Wiederaufladung von Batterien elektrisch betriebener Fahrzeuge.

Neben der geringeren Reichweite elektrisch betriebener Fahrzeuge gegenüber herkömmlichen Fahrzeugen mit Verbrennungsmotor ist ein wesentliches Problem die Dauer des "Tankens", d.h. der Wiederaufladung der Batterien. Während bei Autos ein Auftanken im Bereich von 2 Minuten dauert, sind bei einem Elektroauto Ladezeiten von 30 Minuten und mehr üblich. Die Ladezeiten hängen dabei von der Kapazität der Batterie und dem Leistungsniveau der jeweiligen Ladestation ab. Letztere kann 25 kW, 50 kW oder auch bis zu 150 kW betragen. Auch wenn die Leistung aus elektrischer Sicht noch gesteigert werden könnte, würden die dafür nötigen Ladeanschlusskabel zunehmend unhandlich und für den privaten Nutzer schwer verwendbar.

Es ist Aufgabe der vorliegenden Erfindung, ein elektrisch betriebenes Fahrzeug anzugeben, das verbessert ist bezüglich der Ladezeit für das Wiederaufladen der Batterie. Eine weitere Aufgabe ist, ein Ladesystem mit mehreren Ladestationen anzugeben, dass eine Verbesserung der Ladezeiten ermöglicht.

Hinsichtlich des elektrisch betriebenen Fahrzeugs wird die Aufgabe durch ein Fahrzeug mit den Merkmalen von Anspruch 1 gelöst. Hinsichtlich des Ladesystems wird die Aufgabe durch ein Ladesystem mit den Merkmalen von Anspruch 7 gelöst.

Das erfindungsgemäße elektrisch betriebene Fahrzeug umfasst einen Elektromotor für den Antrieb des Fahrzeugs, eine Batterie zur elektrischen Versorgung des Elektromotors und eine Ladeanschlussbuchse zum Anschluss eines Ladekabels für die elektrische Wiederaufladung der Batterie.

Weiterhin ist eine zweite Ladeanschlussbuchse zum Anschluss eines zweiten Ladekabels für die elektrische Wiederaufladung der Batterie vorhanden.

Bei dem Fahrzeug kann es sich um ein Auto handeln oder ein Nutzfahrzeug wie einen elektrisch betriebenen Bus oder Lastwagen. Das Fahrzeug kann auch mehrere Elektromotoren umfassen. Diese können beispielsweise als Radnabenmotoren ausgeführt sein.

Für die Erfindung wurde erkannt, dass durch den Anschluss eines zweiten Ladekabels eine Verdoppelung der übertragbaren Leistung erreicht werden kann. Dadurch wird die Ladezeit für das Wiederaufladen der Batterie halbiert. Da sich die Ladezeiten derzeit immer noch im Bereich von Stunden bewegen, stellt eine Halbierung der Ladezeit einen erheblichen Gewinn für den einzelnen Nutzer dar. Insgesamt kann dadurch eine Verbesserung der Akzeptanz für elektrisch betriebene Fahrzeuge erreicht werden.

Das erfindungsgemäße Ladesystem zur elektrischen Wiederaufladung von Batterien von elektrisch betriebenen Fahrzeugen umfassend eine Mehrzahl von Ladestationen zum Anschluss an ein jeweiliges Fahrzeug, wobei die Ladestationen jeweils eine Steuereinrichtung zur Steuerung eines Aufladevorgangs umfassen. Dabei ist wenigstens ein Teil der Steuereinrichtungen ausgestaltet zur Erkennung, ob zwei oder mehr der Ladestationen mit demselben Fahrzeug verbunden sind.

Ein solches Ladesystem kann also erkennen, dass ein entsprechend ausgestaltetes Fahrzeug für die Wiederaufladung angeschlossen ist. Dadurch können die Steuerungseinrichtungen der Ladestationen den Ladevorgang geeignet steuern. Beispielsweise kann die Stromregelung so eingestellt werden, dass elektrische Schwingvorgänge der gemeinsam angeschlossenen Ladestationen vermieden werden.

Weiterhin ist es dadurch auch möglich, bei der Abrechnung des Ladevorgangs zu berücksichtigen, dass zwei Ladestationen parallel verwendet wurden. Beispielsweise kann der verwendete Stromtarif angepasst werden.

Vorteilhafte Ausgestaltungen der erfindungsgemäßen Energieerzeuger-Anlage gehen aus den abhängigen Ansprüchen hervor. Dabei kann die Ausführungsform nach den unabhängigen Ansprüchen mit den Merkmalen eines der Unteransprüche oder vorzugsweise auch mit denen aus mehreren Unteransprüchen kombiniert werden. Demgemäß können noch zusätzlich folgende Merkmale vorgesehen sein:
- Die Ladeanschlussbuchsen können für den Anschluss von DC-Ladekabeln ausgestaltet sein. Mit der Aufladung mittels Gleichstroms sind derzeit die höchsten Ladeleistungen von bis zu 150 kW erreichbar. So sind mit zwei Ladekabeln nach derzeitigem Stand Ladeleistungen bis 300 kW möglich. Vorteilhaft beim Anschluss zweier DC-Ladekabel ist weiterhin, dass diese im Fahrzeug parallelgeschaltet sein können, ohne dass beispielsweise weitere Komponenten wie ein zusätzlicher Umrichter nötig sind. Es versteht sich, dass das Ladesystem zweckmäßig auch ein DC-Ladesystem ist.
- Das Fahrzeug kann eine Kommunikationseinrichtung für den Datenaustausch mit einer angeschlossenen Ladestation aufweisen, wobei die Kommunikationseinrichtung ausgestaltet ist, einen Datenaustausch mit zwei angeschlossenen Ladestationen vorzunehmen. Mit anderen Worten kann die Kommunikationseinrichtung einen Datenaustausch mit beiden angeschlossenen Ladestationen vornehmen, um den Ladevorgang geeignet zu steuern.
- Besonders vorteilhaft ist es, wenn die erste Ladeanschlussbuchse an einer ersten Seite des Fahrzeugs angeordnet ist und die zweite Ladeanschlussbuchse an einer von der ersten Seite abgewandten zweiten Seite angeordnet ist. Mit Ladeanschlussbuchsen auf der linken und auf der rechten Seite ist der Anschluss an zwei nebeneinander stehende Ladestationen in typischen Ladesystemen vereinfacht. Weiterhin besteht bei Anschluss von nur einem Ladekabel freie Auswahl der Seite, auf der das Kabel eingesteckt wird. Das steht im Gegensatz zu der typischen Situation heutiger Fahrzeuge mit Verbrennungsmotor, bei denen der Fahrer für das Tanken beachten muss, an welcher Seite der Einfüllstutzen angebracht ist.
- Die Steuerungen der Ladestationen, die zur Regelung des Stroms zu einer angeschlossenen Batterie eines Fahrzeugs ausgestaltet sind, können weiterhin wenigstens zum Teil zu einer Unterdrückung von Schwingvorgängen der Regelung des Stroms bei Anschluss zweier der Ladestationen an dasselbe Fahrzeug ausgestaltet sein.

Weitere Vorteile und Merkmale sind der folgenden Beschreibung von Ausführungsbeispielen anhand der Figuren zu entnehmen. In den Figuren bezeichnen gleiche Bezugszeichen gleiche Bauteile und Funktionen.

Es zeigen schematisch:
Figur 1 ein elektrisch betriebenes Fahrzeug,
Figur 2 ein Ladesystem mit mehreren Ladestationen,
Figur 3 eine Detailsicht eines Fahrzeugs mit zwei angeschlossenen Ladestationen.

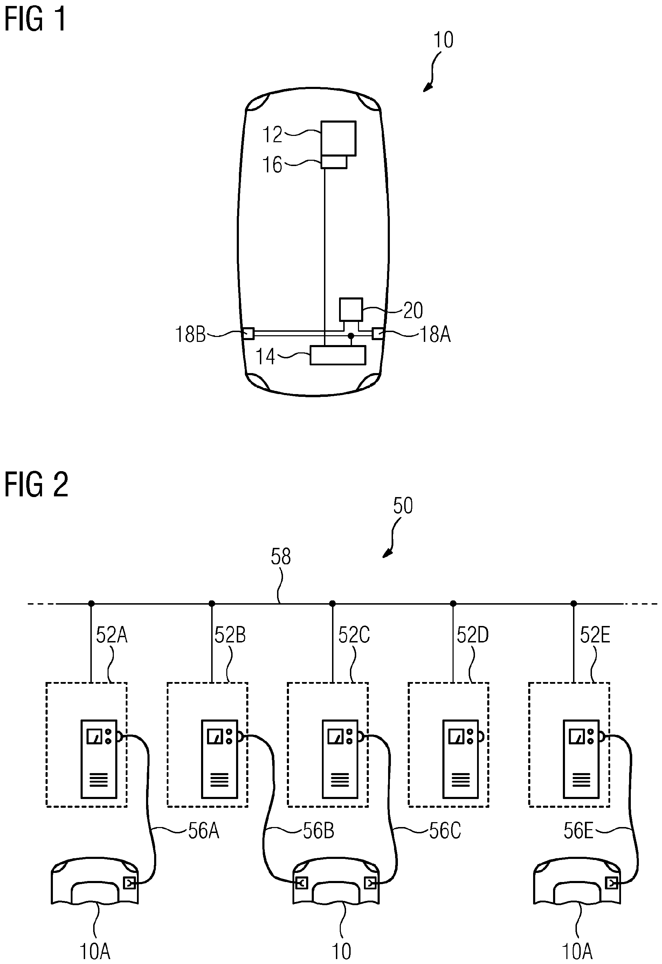

Figur 1 zeigt schematisch ein elektrisch betriebenes Fahrzeug 10, in diesem Beispiel ein Automobil. Das Fahrzeug 10 umfasst als Beispiel einen Elektromotor 12 für den Antrieb. In anderen Ausführungsformen können solche Fahrzeuge auch mehrere Elektromotoren umfassen, beispielsweise einen Elektromotor für jedes angetriebene Rad. Der Elektromotor 12 wird aus einer Batterie 14 gespeist, die über einen Umrichter 16 mit dem Elektromotor 12 verbunden ist.

Eine Wiederaufladung der Batterie 14 erfolgt über den Anschluss eines Ladekabels an eine oder beide der Ladeanschlussbuchsen 18A, B des Fahrzeugs 10. Die Ladeanschlussbuchsen 18A, B sind für den Anschluss eines DC-Ladekabels (Gleichstrom) für das Laden gemäß IEC 61851, Mode 4 ausgelegt. Im Fahrzeug 10 selbst sind die Ladeanschlussbuchsen 18A, B elektrisch direkt mit der Batterie 14 verbunden. Sie sind dabei elektrisch parallelgeschaltet. Eine weitere Verbindung besteht zu einer fahrzeugseitigen Steuereinheit 20, die unter anderem einen Datenaustausch mit einer oder zwei angeschlossenen Ladestationen 52A...E vornimmt. Die Steuereinheit 20 teilt darüber der oder den Ladestationen 52A...E beispielsweise die vom Fahrzeug unterstützte maximale Ladeleistung mit, die von der Ladestation 52A...E beim Ladevorgang beachtet werden muss. Die Steuereinheit 20 ist dazu mit beiden Ladeanschlussbuchsen 18A, B verbunden und elektrisch wie auch softwareseitig ausgestaltet, mit bis zu zwei Ladestationen 52A...E unabhängig voneinander zu kommunizieren.

Die Steuereinheit 20 kann dabei ausgestaltet sein, Daten zur Leistungskapazität der angeschlossenen Ladestationen 52A...E aufzunehmen und ein Signal zu erzeugen, wenn ein Anschluss zweier Ladestationen 52A...E keinen Vorteil bringt, beispielsweise wenn deren jeweilige Leistung so hoch ist, dass ein Laden über beide Ladestationen 52A...E für die Batterie 14 nicht möglich ist. Sofern die maximale fahrzeugseitige Ladeleistung nur von beiden Ladestationen 52A...E zusammen überschritten werden kann, teilt die Steuereinheit die geforderte Leistung auf die beiden angeschlossenen Ladestationen 52A...E auf und kommuniziert entsprechende maximale Ladeleistungen.

Die beiden Ladeanschlussbuchsen 18A, B des Fahrzeugs 10 sind in diesem Beispiel ähnlich zu herkömmlichen Tankstutzen im hinteren Fahrzeugbereich angeordnet. In anderen Beispielen können die Ladeanschlussbuchsen 18A, B auch an der Vorderseite oder an anderen Stellen des Fahrzeugs 10 angeordnet sein. Vorteilhaft ist es aber, wenn die Ladeanschlussbuchsen 18A, B wie in diesem Beispiel auf zwei voneinander abgewandten Seiten des Fahrzeugs 10 angeordnet sind. So kann eine einzelne Ladestation 52A...E auf beiden Fahrzeugseiten angeschlossen werden, ohne dass das Kabel 56A...E um das Fahrzeug 10 herumgeführt werden muss. Beim Anschluss zweier Ladestationen 52A...E können diese ebenfalls ideal angeschlossen werden, da die Ladestationen 52A...E üblicherweise etwa im Abstand einer Autobreite aufgestellt sind und jeweils einem Parkplatz oder zwei benachbarten Parkplätzen zugeordnet sind wie in Figur 2.

Figur 2 zeigt schematisch eine Sicht auf ein Ladesystem 50, das mehrere Ladestationen 52A...E umfasst. Die Ladestationen 52A...E sind mit einem Versorgungsnetzwerk 58 verbunden, das ein Niederspannungsnetz oder ein Mittelspannungsnetzwerk sein kann. Jede der Ladestationen 52A...E umfasst ein Ladekabel 56A...E zum Anschluss an die Ladeanschlussbuchsen 18A, B eines elektrisch betriebenen Fahrzeugs 10. Ebenfalls in Fig. 2 gezeigt sind zwei weitere Fahrzeuge 10A, die mit jeweils einem Ladekabel 56A, E an jeweils eine Ladestation 52A, E angeschlossen sind. In diesem Beispiel sollen die Ladestationen 52A...E jeweils eine Ladeleistung von 120 kW haben. Die weiteren Fahrzeuge 10A können also mit einer maximalen Leistung von 120 kW aufladen. Eine Beladung der Batterie von 80 kWh dauert in diesem Fall etwa 40 Minuten.

Figur 2 zeigt auch den Anschluss des Fahrzeugs 10 an zwei nebeneinander stehende Ladestationen 52B, C gleichzeitig. Die Ladekabel 56B, C der beiden Ladestationen 52B, C sind mit den beiden Ladeanschlussbuchsen 18A, B verbunden und somit können beide Ladestationen 52 B, C gleichzeitig für die Aufladung der Batterie 14 verwendet werden. Es kann also mit bis 240 kW geladen werden. Die Ladezeit für die beispielhaften 80 kWh beträgt somit nur 20 Minuten.

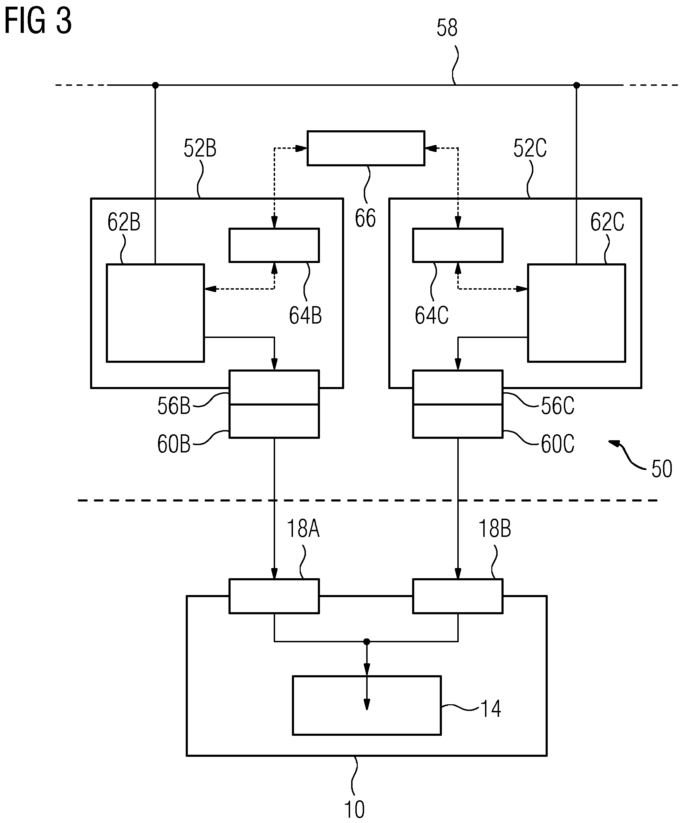

Fig. 3 zeigt schematisch die betroffenen Komponenten des Fahrzeugs 10 und der beiden angeschlossenen Ladestationen 52B, C. Die Batterie 14 des Fahrzeugs 10 ist parallel mit beiden Ladeanschlussbuchsen 18A, B verbunden. Der Ladestrom für die Batterie 14 entspricht daher der Summe der von den angeschlossenen Ladestationen 52B, C kommenden Ladeströme. Die Ladekabel 56B, C der beiden Ladestationen 52B, C sind dafür über jeweilige Stecker 60B, C in die Ladeanschlussbuchsen 18A, B eingesteckt. Darüber ist ein in den beiden Ladestationen 52B, C vorhandener AC/DC-Wandler 62B, C mit der Batterie 14 verbunden. Eine jeweilige Ladesteuerung 64B, C in den beiden Ladestationen 52B, C steuert die beiden AC/DC-Wandler 62B, C so an, dass ein Ladestrom zur Batterie 14 fließt, der den Vorgaben des Fahrzeugs entspricht. Diese Vorgaben werden vorab durch die Steuereinheit 20 des Fahrzeugs in Verbindung mit der Ladesteuerung 64B, C festgelegt. Der Ladestrom kann beispielsweise dem maximal möglichen Ladestrom der Ladestationen 52B, C entsprechen, wobei auch dieser Wert durch eine Regelung konstant gehalten wird.

Die Ladesteuerung 64B, C regelt den Ladestrom dabei so, dass Schwingvorgänge im Stromfluss, die sich durch die beiden angeschlossenen AC/DC-Wandler 62B, C ergeben könnten, vermieden werden. Das kann beispielsweise dadurch erfolgen, dass die beiden Ladesteuerungen 64B, C im Master-Slave-Betrieb arbeiten. Dazu registrieren die beiden Ladesteuerungen 64B, C oder eine übergeordnete Gesamtsteuerung 66, dass die zwei Ladestationen 52B, C mit demselben Fahrzeug 10 verbunden sind und wechseln daraufhin in einen Betrieb, in dem eine der beiden Ladestationen 52B, C eine Master-Rolle übernimmt und die andere der Ladestationen 52B, C eine Slave-Rolle. Die Ladestation 52B, C mit der Master-Rolle übernimmt die Festlegungen beispielsweise des Ladestroms und die Ladestation 52B, C mit der Slave-Rolle folgt den Vorgaben der Ladestation 52B, C mit der Master-Rolle.

### Bezugszeichenliste

- 10: elektrisch betriebenes Fahrzeug
- 10A: weitere Fahrzeuge
- 12: Elektromotor
- 14: Batterie
- 16: Umrichter
- 18A, B: Ladeanschlussbuchsen
- 20: Steuereinheit
- 50: Ladesystem
- 52A...E: Ladestationen
- 56A...E: Ladekabel
- 58: Versorgungsnetzwerk
- 60A...E: Stecker
- 62A...E: AC/DC-Wandler
- 64A...E: Ladesteuerungen
- 66: Gesamtsteuerung

## Patentansprüche

1. Elektrisch betriebenes Fahrzeug (10, 10A) mit
- einem Elektromotor (12) für den Antrieb des Fahrzeugs (10, 10A),
- einer Batterie (14) zur elektrischen Versorgung des Elektromotors (12),
- einer Ladeanschlussbuchse (18A) zum Anschluss eines Ladekabels (56A...E) für die elektrische Wiederaufladung der Batterie (14),
**gekennzeichnet durch** eine zweite Ladeanschlussbuchse (18B) zum Anschluss eines zweiten Ladekabels (56A...E) für die elektrische Wiederaufladung der Batterie (14).

2. Elektrisch betriebenes Fahrzeug (10, 10A) nach Anspruch 1, bei dem die Ladeanschlussbuchsen (18A, B) für den Anschluss von DC-Ladekabeln (56A...E) ausgestaltet sind.

3. Elektrisch betriebenes Fahrzeug (10, 10A) nach Anspruch 1, bei dem die Ladeanschlussbuchsen (18A, B) elektrisch parallelgeschaltet sind.

4. Elektrisch betriebenes Fahrzeug (10, 10A) nach einem der vorangehenden Ansprüche mit einer Kommunikationseinrichtung (20) für den Datenaustausch mit einer angeschlossenen Ladestation (52A...E), wobei die Kommunikationseinrichtung (20) ausgestaltet ist, einen Datenaustausch mit zwei angeschlossenen Ladestationen (52A...E) vorzunehmen.

5. Elektrisch betriebenes Fahrzeug (10, 10A) nach einem der vorangehenden Ansprüche, bei dem die erste Ladeanschlussbuchse (18A) an einer ersten Seite des Fahrzeugs (10, 10A) angeordnet ist und die zweite Ladeanschlussbuchse (18B) an einer von der ersten Seite abgewandten zweiten Seite angeordnet ist.

6. Elektrisch betriebenes Fahrzeug (10, 10A) nach einem der vorangehenden Ansprüche, ausgestaltet zu einer Aufladung der Batterie (14) mit einer Gesamtleistung von wenigstens 100 kW, insbesondere wenigstens 240 kW, in besonderer Ausgestaltung wenigstens 300kW.

7. Ladesystem (50) zur elektrischen Wiederaufladung von Batterien (14) von elektrisch betriebenen Fahrzeugen (10, 10A), umfassend eine Mehrzahl von Ladestationen (52A...E) zum Anschluss an ein jeweiliges Fahrzeug (10, 10A), wobei die Ladestationen (52A...E) jeweils eine Steuereinrichtung (64A...E) zur Steuerung eines Aufladevorgangs umfassen, wobei wenigstens ein Teil der Steuereinrichtungen (64A...E) ausgestaltet ist zur Erkennung, ob zwei oder mehr der Ladestationen (52A...E) mit demselben Fahrzeug (10, 10A) verbunden sind.

8. Ladesystem (50) nach Anspruch 7, ausgestaltet für eine gleichstrombasierte Wiederaufladung.

9. Ladesystem (50) nach Anspruch 7 oder 8, bei dem die Ladesteuerungen (64A...E) der Ladestationen (52A...E) ausgestaltet sind zur Regelung des Stroms zu einer angeschlossenen Batterie (14) eines Fahrzeugs (10, 10A) und bei dem wenigstens ein Teil der Ladesteuerungen (64A...E) ausgestaltet ist zu einer Unterdrückung von Schwingvorgängen der Regelung des Stroms bei Anschluss zweier der Ladestationen (52A...E)an dasselbe Fahrzeug (10, 10A).

10. Ladesystem (50) nach einem der Ansprüche 7 bis 9, ausgestaltet zur Aufladung einer Batterie (14) mittels zweier Ladestationen (52A...E) mit einer Gesamtleistung von wenigsten 300 kW.
